# EUROPEAN PATENT APPLICATION

(11) **EP 4 296 311 A1**
(43) Date of publication of application: **27.12.2023**
(21) Application number: 21926401.7
(22) Date of filing: 14.10.2021
(51) Int. Cl.: C08L 3/06, C08K 5/11, C08J 3/18, C08B 31/04, B65D 1/00, B65D 30/02

(54) **METHOD FOR OBTAINING A PLASTICISED MATERIAL, THE PLASTICISED MATERIAL OBTAINED AND USE THEREOF**

(30) Priority: 19.02.2021 ES 202130136
(71) Applicant: Universidad De Alicante, 03690 San Vicente del Raspeig (ES)
(72) Inventor: MARTÍN GULLÓN, Ignacio, 03690 SAN VICENTE DEL RASPEIG (ES); GARCÍA QUESADA, Juan Carlos, 03690 SAN VICENTE DEL RASPEIG (ES); GARCÍA MONTALBÁN, Mercedes, 03690 SAN VICENTE DEL RASPEIG (ES); DOMENE LÓPEZ, Daniel, 03690 SAN VICENTE DEL RASPEIG (ES)
(74) Representative: Ibarra Garcia, Isabel
(86) International application number: PCT/ES2021/070747
(87) International publication number: WO 2022/175570

(57) **Abstract**

The present invention relates to a method for obtaining an improved plasticised material resulting from two differentiated steps: an esterification reaction for synthesising a polycarboxylic acid ester oligomer in the presence of excess polyol and a catalyst, and a second step of gelatinisation and plasticisation at temperatures above 90°C involving a starch mixed with water and with the polycarboxylic acid ester oligomer with excess polyol obtained in the previous step, and a coadjuvant. Advantageously, the catalyst used in the esterification reaction is the same as the coadjuvant used in the gelatinisation and plasticisation reaction. The present invention also relates to the improved plasticised material obtained by means of the described method, which has a high stability and a low migration rate compared to known plasticised materials and the use thereof.

## Description

### TECHNICAL FIELD

The present invention relates to a plasticised material which is based on thermoplastic starch and advantageously has a low plasticiser migration, so it is intended to be used as flexible or rigid packaging.

The present invention also relates to the method used for obtaining same, which is necessarily performed in two differentiated and independent steps: a step of an esterification reaction and a second step of gelatinisation and plasticisation at temperatures above 100ºC.

### BACKGROUND OF THE INVENTION

Known polymers based on thermoplastic starch have a high plasticiser migration and, therefore, little stability of their properties over time.

The known thermoplastic starch formulations require gelatinising and plasticising the starch in the presence of plasticisers, which is usually water (which is subsequently removed for the most part) and another plasticiser with a higher boiling point. Glycerol and other low molecular weight polyols are commonly used as a plasticiser in conventional formulations.

Plasticised starch, surrounded by plasticiser molecules, has a high tendency to retrograde, i.e., it partially recovers its original ordered structure, which leads to a decrease in its properties.

Given the low molecular weight of glycerol, there is little steric hindrance and the starch chains are reordered in relatively short times, causing the migration of glycerol to the surface of the starch material and thus decreasing the stability of the physical and mechanical properties of said material, becoming very brittle.

At the same time, thermoplastic starch formulations are very hydrophilic and their properties are greatly reduced in environments with high relative humidity. Therefore, thermoplastic starch has not come to be established as it is not durable and not at all stable. Additionally, thermoplastic starch formulations are hardly processable by means of conventional extrusion machinery and are usually co-processed with other polymers, obtaining greater stability and processability, but it will have a different degree of biodegradability and environmental impact depending on which polymer is used. Polyvinyl alcohol (PVA) is a highly biodegradable hydrophilic polymer, and it has a synergistic effect when co-processed with thermoplastic starch, forming a compound, and other coadjuvants, such as zinc stearate, could also be involved. However, these compounds (or blends) based on thermoplastic starch continue to lack high stability over time and resistance to environmental humidity.

Patent document number US20070072988A1, which discloses methods of making and synthesising tricarboxylic acid ester-based plasticisers, is known in this field of the art. However, the document does not mention starch, although the permanence of the plasticiser was tested.

Patent document number US 2011/0046283A1 discloses mixtures of citric acid and uses thereof. This document uses ester mixtures obtained from citric acid as PVC plasticisers for the purpose of replacing conventional plasticisers (DEHP or DINP) with other less toxic plasticisers. No migration studies are performed and starch is not mentioned in the document.

In addition, patent document number US4931583A describes the synthesis of citrate esters that are used as PVC plasticisers and have a lower toxicity. Starch is not mentioned in the document.

Patent document number US 2019/0055376A1 discloses plasticiser compositions containing polymeric dicarboxylic acid esters and phthalic acid dialkylesters. In fact, the patent document does not mention starch, but it applies to thermoplastic polymers in general, particularly mentioning PVC.

Lastly, two scientific papers relating to the object of the present invention are cited. Namely, the paper by Halpern, J. M., Urbanski, R., Weinstock, A. K., Iwig, D. F., Mathers, R. T., & von Recum, H. A. (2014) entitled "A biodegradable thermoset polymer made by esterification of citric acid and glycerol", published by the Journal of Biomedical Materials Research (Part A, 102(5), 1467-1477). This paper details the citric acid and glycerol esterification reaction. However, the polyester obtained is not applied as a starch plasticiser.

And the paper entitled "PVC materials without migration obtained by chemical modification of azide-functionalized PVC and triethyl citrate plasticizer", by authors Jia, P., Hu, L., Feng, G., Bo, C., Zhang, M., & Zhou, Y., published in 2017 by "Materials Chemistry and Physics" (190, 25-30). In this paper, esters are obtained from citric acid and applied as PVC plasticisers, but they are not applied to starch.

For this reason, the applicant of the present patent application has found the need to develop a method which allows obtaining a plasticised material based on thermoplastic starch that is stable and durable over time.

### DESCRIPTION OF THE INVENTION

An object of invention of the present patent relates to a method for obtaining an improved plasticised material consisting of at least two differentiated steps which are detailed below:
- First step: an esterification reaction between at least one dicarboxylic and/or tricarboxylic acid and a polyol, using a zinc-based catalyst or a solid zeolite catalyst, such that there are excess polyol hydroxyls with respect to the carboxyls of the dicarboxylic and/or tricarboxylic acid, with a polycarboxylic acid ester oligomer being obtained in the presence of the excess polyol and the catalyst.
- Second step: a gelatinisation and plasticisation reaction at temperatures above 90ºC of the starch mixed with water and with the polycarboxylic acid ester oligomer with excess polyol, obtained from the previous step, and a coadjuvant.

Advantageously, the catalyst used in the esterification reaction is the same component as the coadjuvant used in the gelatinisation and plasticisation reaction. The component in question thereby acts in the first step as a catalyst, whereas the remaining excess acts in the second step as a coadjuvant.

Moreover, the polycarboxylic acid ester oligomer (plasticiser) obtained in the first step has a lower mobility of the chains forming it than the mobility of the chains in the thermoplastic starch which is involved in the second step.

Advantageously, performing the step of esterification separately with respect to the step of gelatinisation and plasticisation of the starch allows in the first step the controlled and catalysed synthesis of the polycarboxylic acid ester oligomer branched with a low number of units, mainly when the polyol is in stoichiometric excess, and there are few unreacted carboxyl groups, so a possible cross-linking that may take place when the mentioned oligomer is added to the starch during the step of gelatinisation and plasticisation is minimised or mitigated.

Furthermore, the polycarboxylic acid ester oligomer obtained in the first step of the method will be compatible as a plasticiser of starch-based materials as it has excess hydroxyl groups, plus the unreacted excess polyol, favouring the reduction of migration, giving rise to an improved plasticised material with more stable mechanical properties over time.

Therefore, as previously stated, a first step of esterification and synthesis of the polycarboxylic acid ester oligomers with polyols is performed.

To that end, oligomer synthesis is performed by means of an esterification reaction between one or more dicarboxylic and/or tricarboxylic acids and a polyol in a reactor using zinc-based catalysts or other solid zeolite catalysts, such as commercial catalyst Amberlyst 15 ^{®}.

Preferably, the dicarboxylic and/or tricarboxylic acids used in the esterification reaction are citric acid, malic acid and/or tartaric acid, among others, whereas the polyol used in the esterification reaction and in the gelatinisation and plasticisation reaction has several hydroxyl groups, with glycerol or sorbitol, among others, preferably being used.

Moreover, the zinc-based catalyst used in the esterification reaction is zinc stearate, which provides lubricating properties and will initially favour the subsequent gelatinisation process.

Preferably, the acid and polyol mixture should be such that there are excess hydroxyls with respect to carboxyls, such that all the acid molecules have reacted (although perhaps not all the carboxyls). A viscous liquid mixture containing polycarboxylic acid ester oligomers in the presence of excess or unreacted polyol, by way of sol-gel, and the catalyst, is obtained at the end of the first step.

Upon concluding the first step of the method for obtaining improved plasticised material, the second step, which involves gelatinisation and plasticisation at temperatures above 90ºC, is performed.

In the second step, a mixture of water, the polycarboxylic acid ester oligomer, polyol and the coadjuvant, which are mixed with the starch, is prepared as a gelatinisation and plasticisation medium. It should be noted that the polycarboxylic acid ester oligomer is an element resulting from the first step, whereas the polyol and the coadjuvant are compounds that were present in excess in the first step or step of esterification.

Durante the step of gelatinisation performed at temperatures above 90ºC, the medium molecular weight but highly branched oligomer or oligoester easily penetrates between the gelatinised starch chains.

At the end of the step of gelatinisation, most of the water has been removed due to the effect of the temperature and the shear applied in the process. The plasticised material (thermoplastic starch), once cooled, thereby has less mobility of the chains and the plasticiser used (polycarboxylic acid ester oligomer), due to the steric hindrances, also has lower migration to the surface of the material with respect to other plasticised thermoplastic starches, for example, with glycerine.

Optionally, a thermoplastic polymer PVA (polyvinyl alcohol) is involved in the gelatinisation and plasticisation reaction, acting as a high molecular weight plasticiser and which, together with the starch, forms a blend that is mixed with water and with the polycarboxylic acid ester oligomer with the excess polyol and a coadjuvant.

In this sense, with the introduction of plasticisers with a higher molecular weight and steric hindrance, as in the case of thermoplastic PVA, a slight binding to the molecules of the polymer is added, and migration thereof is reduced, thereby controlling starch retrogradation. This allows the mechanical properties to be much more stable over time, in addition to having much higher values, without prejudice to the fact that the plasticised material obtained from the method will continue to be biodegradable, mainly when it comes into contact with water.

If starch without the presence of another thermoplastic is involved in the step of gelatinisation and plasticisation, the material must be shaped before cooling (for example, by means of cast film or blown film).

If starch together with another thermoplastic, such as the thermoplastic PVA, is involved in the step of gelatinisation and plasticisation, cooling takes place directly and it can subsequently be reprocessed in molten state.

The detailed method is novel and innovative in that:
- The use of a plasticiser in the step of gelatinisation and plasticisation based on a polycarboxylic acid ester oligomer and polyols, which has a higher molecular weight and large steric volume with respect to other common plasticisers controls thermoplastic starch retrogradation after removing water.
- The presence of the zinc-based catalyst or the solid zeolite catalyst mixed with the oligomer, obtained in the first step, promotes the esterification reaction between free carboxylic groups of the oligomer with starch hydroxyls, forming a mild cross-linking, which also contributes, together with the steric volume, to slowing down the mobility of this plasticiser with respect to the starch chains, greatly limiting migration of the plasticiser with respect to when only glycerol is used.
- The use of zinc stearate as a catalyst in the esterification reaction and as a coadjuvant in the gelatinisation and plasticisation reaction provides a triple function in the method for obtaining the improved plasticised material.

Advantageously, the improved plasticised material obtained in the step of gelatinisation and plasticisation exhibits very important mechanical increases with respect to its homologues that use only water and glycerol.

Moreover, in the case of using mixtures of starch and the thermoplastic polymer PVA in the step of gelatinisation and plasticisation, the PVA is involved at a percentage of between 40% and 60%, preferably 50%. The use of water and the mixture of the polycarboxylic acid ester oligomer obtained in the previous step of esterification allow obtaining a plasticised material with improved tensile mechanical properties with increases in the maximum value of maximum stress of 100% with respect to the base material (plasticised only using glycerol), increases in the elastic modulus of more than 150% (above 20 MPa) and elongations at break of more than 500%.

Likewise, the present invention relates to a thermoplastic starch (plasticised material) compound that incorporates a previously synthesised plasticiser material based on polyol polyester and polycarboxylic acid, such that in the thermoplastic starch compound starch retrogradation can be controlled and the starch migration rate reduced.

It should be noted that the improved plasticised material obtained reduces the plasticiser migration rate from 16% in the base material to migration rate values below 3% in the materials using the ester oligomer mixture, as demonstrated in the assays that will be described in the section on the preferred embodiment of the invention.

The invention also relates to the use of the plasticised material obtained according to the method detailed above as flexible packaging, where it is particularly of interest for use thereof in bags containing food, due to its low degree of migration.

Moreover, the invention also relates to the use of the plasticised material obtained according to the method detailed above as rigid packaging, for example, for being made into containers which can be hermetically sealed.

Therefore, it should be noted that the improved plasticised material obtained from the method detailed above exhibits a migration rate over time of less than 10%, whereas its elastic modulus is at least 10 MPa.

### BRIEF DESCRIPTION OF THE DRAWINGS

To complement the description that will be made below and to help better understand the features of the invention according to the preferred practical embodiments thereof, a set of figures is attached as an integral part of said description, where the following is depicted in an illustrative and non-limiting manner:
Figure 1 shows a graphical representation of the yield of the polymerisation reaction, monitored by the reacted carboxylic groups over time according to Example 1.
Figure 2 shows a graphical representation of the derivation of mass variation with respect to temperature for pure compounds (citric acid and glycerol) and binary mixtures prepared according to Example 1.
Figure 3 shows a graphical representation for the samples of Example 2 of the yield of the polymerisation reaction with different carboxylic acids and glycerol, by varying the excess glycerol, monitored by the percentage of reacted carboxylic groups over time.
Figure 4 shows a graphical representation of the mechanical properties of the samples of Example 3.
Figure 5 shows a graphical representation of the migration rate over time of the samples of Example 3.

### PREFERRED EMBODIMENT OF THE INVENTION

This section describes three embodiments of the invention which allow demonstrating the arguments set forth above which lead to confirming the advantageous properties of the improved plasticised material obtained by means of the developed method.

Namely, the examples that are performed are the following:
Example 1: Synthesis of the oligomer from citric acid and glycerol. Effect of the reaction time.
Example 2: Synthesis of the oligomer using citric acid, malic acid and tartaric acid, and glycerol demonstrating the influence of excess glycerol on carboxylic acid conversion yield using zinc stearate as a catalyst.
Example 3: Formulations of thermoplastic starch and polyvinyl alcohol by mixing in molten state. Effect of the use of glycerol and polyester oligomers on properties.

Namely, Example 1 is performed according to an embodiment of the first step of the method of the invention, where the objective is to synthesize polycarboxylic acid ester oligomer from citric acid, as it is a tricarboxylic acid, and glycerol, as it is a polyol, for the purpose of verifying the reaction time.

For the preparation of Example 1, two equal mixtures of glycerol and citric acid are prepared, where glycerol has a 60% molar excess (70.6 mmol of citric acid, 113.1 mmol of glycerol, for a total of 24 g).

Amberlyst-15 ^{®} (1% molar of the total) (type B samples) and 1.13 g zinc stearate (type A samples) is added to each mixture as a catalyst. They are vigorously mixed and taken to an oven at 110ºC to form the oligomer at different times: 0.2, 0.5, 1, 2, 5, 10, 24, 48, and 72 hours. Likewise, a mixture without a catalyst was prepared as a control and taken to be treated in an oven at 110ºC for a single time of 10 hours.

The yield of the esterification reaction was evaluated by means of titration of free carboxylic groups with sodium hydroxide. To that end, 2 grams of mixture reacted at different times (type A and type B samples) were placed in 500 mL of deionised water and vigorously dispersed until complete homogeneity.

Lastly, aliquots were titrated with 1M NaOH using phenolphthalein solution as an indicator. The size of the polymerised oligomer structure was monitored by means of differential thermal analysis (DTG), using a NETZSCH TGA/STA 449 F5 Jupiter analyser.

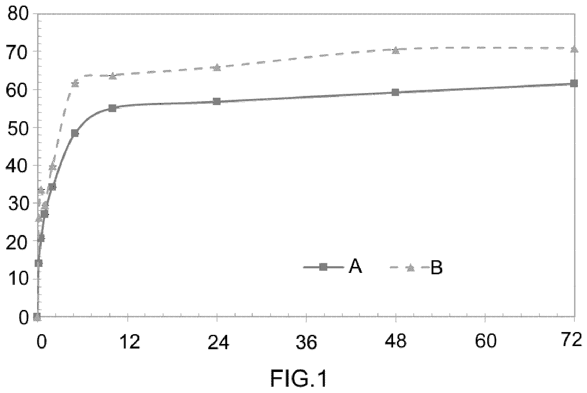

Figure 1 represents the reaction time (expressed in hours) on the x-axis and the yield of the reaction (expressed in degree of conversion in %) on the y-axis. In that sense, Figure 1 shows the yield of the esterification reaction for type A samples and type B samples, measured based on the number of reacted carboxylic groups.

It can be observed in Figure 1 that final yield values of 70 and 60% are achieved when using Amberlyst-15 ^{®} (type B samples) and zinc stearate (type A samples), respectively, although these values are already virtually achieved for reaction times of 10 hours.

Given that one citric acid molecule has three carboxylic groups, it can be confirmed with high probabilities that all the citric acid is reacted, and for steric reasons and the action of each heterogeneous catalyst, there are unreacted carboxylic groups in the oligomers.

The new mixtures form a single phase, are much more viscous, and have excess glycerol. For the mixture without a catalyst as a control polymerisation was taken to 10 hours, with a yield of 39%.

For the purpose of evaluating the behaviour of the polycarboxylic acid ester oligomer with the catalysts of the invention, differential thermal analysis is performed.

To that end, the following compounds are compared: pure citric acid (sample C), pure glycerol (sample D), mixtures with a proportion of 57% citric acid which are polymerised with zinc stearate (sample E) for 10 hours, and mixtures with a proportion of 57% citric acid which are polymerised with Amberlyst-15 ^{®} (sample F) for 10 hours.

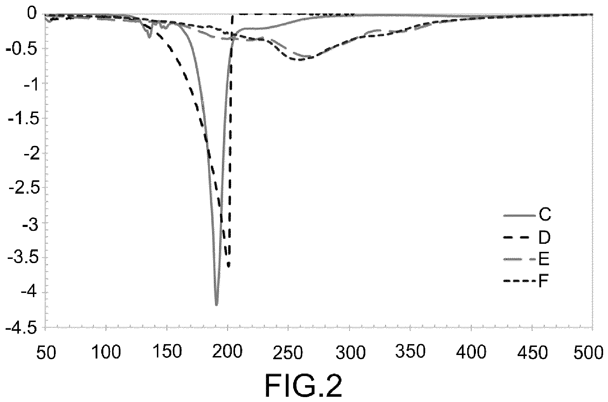

Figure 2 shows the representation of the differential thermal analysis performed, showing the derivation of the mass loss with respect to temperature (DTGA expressed in %/ºC) compared to the temperature (expressed in ºC) for the mentioned compounds (sample C, sample D, sample E, sample F).

In that sense, it can be seen in Figure 2 that the pure glycerol (sample D) completely evaporates (without decomposition) at 200ºC, whereas pure citric acid (sample C) partially decomposes after 175ºC, also being fully decomposed at 200ºC.

Moreover, it can also be clearly seen in Figure 2 that in the polycarboxylic acid ester oligomer reacted for 10 hours at 110ºC with zinc stearate (sample E) and in the polycarboxylic acid ester oligomer reacted for 10 hours at 110ºC with Amberlyst-15 ^{®} (sample F), there is some glycerol left, but most of the matter has a higher thermal stability, exhibiting a broad maximum decomposition peak at 270ºC.

Therefore, based on Example 1 it can be concluded that the material obtained from the polycarboxylic acid ester oligomer reacted with zinc stearate (sample E) and from the polycarboxylic acid ester oligomer reacted with Amberlyst-15 ^{®} (sample F) decomposes at very high temperatures (270ºC), so it can be concluded that these oligomers exhibit relevant thermal stability.

In Example 2, the synthesis of the oligomer using citric acid, malic acid, and tartaric acid, and glycerol is performed for the purpose of verifying the influence of excess glycerol on the carboxylic acid conversion yield using zinc stearate as a catalyst.

Example 2 reproduces some specific embodiments of the first step of the method for obtaining the improved plasticised material of the present invention. In that sense, Example 2 starts from binary acid-glycerol mixtures totalling 24 grams, containing different mass percentages of acid in the mixture: 5%, 10%, 25% and 45%.

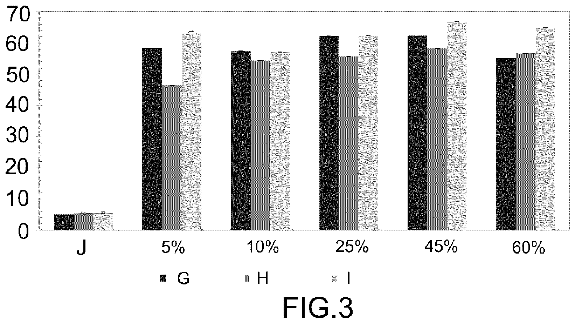

In Figure 3, series G corresponds to samples containing citric acid, series H corresponds to samples containing malic acid, and series I corresponds to samples containing tartaric acid.

Furthermore, mixtures were prepared in which the stoichiometric excess of hydroxyls compared to carboxyls was 60% (st-60 mol) (in Figure 3, this corresponds with the 60% bars). Bar G of the 60% sample corresponds to 57% by weight of the sample with citric acid. Bar H of the 60% sample corresponds to 48% by weight of the sample with malic acid. Bar I of the 60% sample corresponds to 50.5% by weight of the sample with tartaric acid.

Additionally, samples J, which correspond to a control for each of the acids, are prepared, in which the proportion of the acid is at 5% and in which the esterification reaction has not been carried out.

1% molar zinc stearate, which will act as a catalyst, is added to all these mixtures of Example 2. They are vigorously mixed and taken to an oven at 110ºC for 10 hours to form the polycarboxylic acid ester oligomer at different times.

The yield of the reaction was checked by means of titration of free carboxylic groups with sodium hydroxide. To that end, 2 grams of reacted mixture were placed in 500 mL of deionised water and vigorously dispersed until complete homogeneity. Lastly, aliquots were titrated with 1M NaOH using phenolphthalein solution as an indicator.

Figure 3 shows the results of the degree of conversion of the polymerisation monitored by the molar % of reacted carboxylic groups with respect to the initial total for the different mixtures prepared at 5%, at 10%, at 25%, and at 45%.

It should be noted from the results obtained and represented in Figure 3 that the mere physical mixing of acids and glycerol does not cause a reaction (sample J), although it does cause a possible masking of 5%. Moreover, the excess glycerol does not seem to largely affect the global yield either, i.e., even though there is a great deal of excess glycerol, there is virtually the same percentage of free carboxylic groups, which probably will not react for steric reasons due to the three-dimensional configuration of the polycarboxylic acid ester oligomer formed.

As a general trend, it can be seen that for the sample with a stoichiometric molar excess of 60% in glycerol, the proportion of reacted carboxylic groups drops slightly for citric acid and malic acid.

Another general trend observed is that tartaric acid (bicarboxylic and bihydroxylic) has a slightly higher amount of functional groups that citric acid (tricarboxylic) and malic acid (bicarboxylic, but slightly less polar), even though the three-dimensional structure of the oligomers will be different.

Lastly, Example 3 is performed in relation to the formulations of thermoplastic starch and polyvinyl alcohol by mixing in molten state for the purpose of analysing the effect of the use of glycerol and polyester oligomers (obtained in the first step of the method of the invention) on the properties of the plasticised material obtained.

In Example 3, 5 different samples of thermoplastic starch and polyvinyl alcohol (PVA) were prepared with polymerised mixtures of ester oligomers of citric acid and glycerol, catalysed with zinc stearate (all in stoichiometric excess of glycerol), plus water as the gelatinisation medium. Two control samples were also prepared.

The samples were prepared according to the following table:

| Components | Potato starch | PVA | Water | Oligomer (citric acid + glycerol + zinc stearate) |
|---|---|---|---|---|
| Mass (g) | 20 | 20 | 18 | 24 |

The potato starch supplied by Sigma Aldrich was used as potato starch. However, the starch used is not limiting, and it is possible to use different starches from different botanical sources, such as potato, wheat, corn, or rice; and with different prior treatments (pre-gelatinised, waxy starches, etc.), obtaining equivalent results with the technical advantages they offer.

Mowiol 2098 supplied by Sigma-Aldrich was used as PVA. However, the PVA used is not limiting, and it is possible to use PVA such as Mowiol 10-98, Mowiol 18-88, Mowiol 29-99, and other commercial types of PVA with different viscosity and degree of hydrolysis, obtaining equivalent results with the technical advantages they offer.
The zinc stearate was supplied by Sigma-Aldrich.

Mixtures of 24 grams of ester oligomer, catalysed by zinc stearate (1% molar) at 110ºC for 10 hours (method described in Example 1), were used, starting from binary mixtures of citric acid and glycerol with citric acid proportions of 5, 10, 25, 45, and 57% (referred to as: 5% sample, 10% sample, 25% sample, 45% sample and 57% sample).

The following were used for the two control samples:
- Control sample 1: mixture of 24 g of citric acid plus glycerol at 57% to which the rest of the components not previously reacted (sample J) were added.
- Control sample 2: mixture of 24 g of citric acid plus glycerol at 57% which were treated at 110ºC and for 10 h without a catalyst (sample K).

The components were placed in a flask, and the powder mixtures were mixed well with the liquid mixtures, leaving it to stand for an hour. Next, they were placed in a Haake Polylab Qc plastograph, with a 50 mL chamber and co-rotating rollers according to the following process: a) 5 minutes at 110ºC and screw speed at 50 rpm, and b) 5 minutes at 110ºC and screw speed at 100 rpm.

Lastly, films (thin sheets) 1 mm thick were prepared in a hot plate press at 160ºC, according to the following method: a) 5 minutes without pressure to favour progressive melting, b) 10 minutes at 7 ton-force. It is then suddenly cooled at room temperature by conduction.

Tensile mechanical characterisation of the samples was performed according to standard ASTM D-882, obtaining specimens of the 1 mm thick sheet by means of a die. An Instron 3344 multi-testing machine was used. This assay gave the elastic or Young's modulus (E), maximum breaking strength (σₘₐₓ), and elongation at break (ε_{break}).

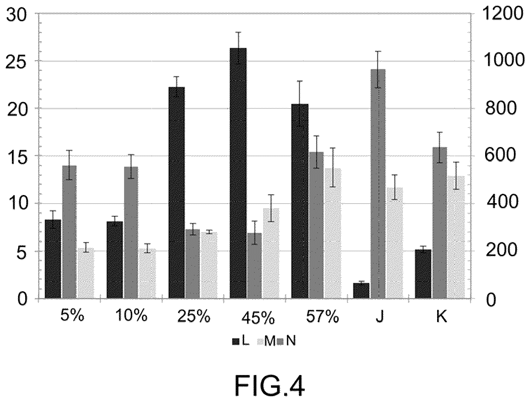

Figure 4 shows the tensile mechanical properties for the samples studied, namely: the 5 samples with a plasticiser polymerised with zinc stearate, different proportions of citric acid and glycerol (5% sample, 10% sample, 25% sample, 45% sample, and 57% sample), and the two control samples: one with mixture of unreacted plasticisers (sample J) and another reacted mixture without a catalyst (sample K).

In Figure 4, the values of elastic/Young's modulus (bars L) and maximum breaking strength (bars M) (both expressed in MPa) are on the main y-axis, and elongation at break (bars N) (expressed in %) is on the secondary axis.

In that sense, in Figure 4 it can be seen that the lowest modulus value is obtained in the control sample (sample J), and as the proportion of citric acid increases, the more the modulus increases, indicative of lower mobility of the reacted oligomer.

The highest modulus value is obtained with the 45% sample, with a high value that is 15 times higher than the unreacted control sample. The 57% sample has also a high modulus, as well as the highest maximum strength of all the samples, with an elongation at break of 600%, which directly involves a high toughness value. In fact, using zinc stearate as a catalyst in the oligomer confers far superior mechanical properties with respect to the second control sample (K) which does not use a catalyst in the polymerisation.

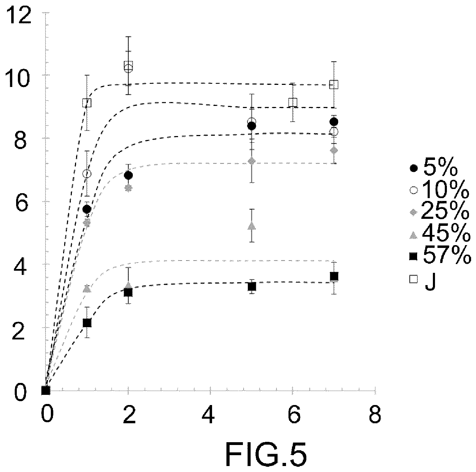

Complementarily to the tensile mechanical characterisation assays, in Example 3, migration assays were performed on the samples obtained, and the results are shown in Figure 5.

To determine the migration of the plasticiser used in the biopolymer or improved plasticised material obtained from the method claimed in the present invention, circular specimens with a diameter of 7 mm were die cut from the 1 mm thick sheet.

The mentioned circular specimens were placed between two Petri dishes on absorbent paper, applying a pressure of 16.5 kPa at 60ºC for different times (1, 2, 5, and 7 days).

To determine the evolution of the migration of the plasticiser to the surface after each of these times, the relative reduction between the initial and final weight, divided by the initial weight, was calculated.

Therefore, Figure 5 shows the evolution of the migration rate (expressed in %) for the different samples (5% sample, 10% sample, 25% sample, 45% sample, and 57% sample) and the plasticiser control sample with 5% citric acid which was not subjected to polymerisation (sample J). The formulations represented in Figure 5 are mixtures of thermoplastic starch and PVA at a 1:1 gravimetric ratio with 60 phr of plasticiser based on citric acid and glycerol which were previously catalytically polymerised with 1% molar zinc stearate (with the exception of sample J), at 110ºC for 10 hours.

As observed in Figure 5, the sample with the value of the highest migration percentage is control sample J (which uses unreacted citric acid and glycerol), whereas all the samples which use polymerised plasticiser exhibit lower migration (5% sample, 10% sample, 25% sample, 45% sample, and 57% sample) over time expressed in days.

The 45% sample and the 57% sample, which contain the highest concentration of polycarboxylic acid ester oligomer and the lowest excess glycerol, have the lowest migration rate, around 3%, whereas control sample J has a migration rate of more than 10%.

Therefore, the results obtained in this last assay and represented in Figure 5 allow concluding that the improved plasticised material obtained according to the method detailed above has a lower migration rate as the mobility in its structure is hindered by the synthesis in two differentiated steps (esterification and gelatinisation).

## Claims

1. The method for obtaining a plasticised material comprising the following steps:
- an esterification reaction between at least one dicarboxylic and/or tricarboxylic acid and a polyol, using a zinc-based catalyst or a solid zeolite catalyst, such that there are excess polyol hydroxyls with respect to the carboxyls of the dicarboxylic and/or tricarboxylic acid, with a polycarboxylic acid ester oligomer being obtained in the presence of the excess polyol and the catalyst;
- a gelatinisation and plasticisation reaction at temperatures above 90ºC of starch mixed with water and with the polycarboxylic acid ester oligomer with excess polyol obtained in the previous step, and a coadjuvant;
**characterised in that** the catalyst used in the esterification reaction is the same as the coadjuvant used in the gelatinisation and plasticisation reaction, and wherein the polycarboxylic acid ester oligomer (plasticiser) has a lower mobility of the chains forming it than the mobility of the chains in the thermoplastic starch.

2. The method for obtaining a plasticised material according to claim 1, **characterised in that** the dicarboxylic and/or tricarboxylic acids used in the esterification reaction are citric acid, malic acid and/or tartaric acid.

3. The method for obtaining a plasticised material according to claim 1, **characterised in that** the polyol used in the esterification reaction and in the gelatinisation and plasticisation reaction has several hydroxyl groups, with glycerol or sorbitol being used.

4. The method for obtaining a plasticised material according to claim 1, **characterised in that** the zinc-based catalyst used in the esterification reaction is zinc stearate.

5. The method for obtaining a plasticised material according to claim 1, **characterised in that** a thermoplastic polymer PVA is involved in the gelatinisation and plasticisation reaction of the starch.

6. The method for obtaining a plasticised material according to claim 5, **characterised in that** the thermoplastic polymer PVA is involved in the gelatinisation and plasticisation reaction of the starch at a percentage of between 40% and 60%.

7. A plasticised material obtained according to the method detailed in any of the preceding claims, **characterised in that** its migration rate over time is less than 10%.

8. The plasticised material obtained according to claim 7, **characterised in that** its elastic modulus is at least 10 MPa.

9. Use of the plasticised material obtained according to the preceding claims, as flexible packaging, preferably in bags containing food.

10. Use of the plasticised material obtained according to the preceding claims, as rigid packaging.
